**Europäisches Patentamt**

**European Patent Office**

**Office européen des brevets**

(19)

(11) Veröffentlichungsnummer: **0 010 059**
**B1**

(12) **EUROPÄISCHE PATENTSCHRIFT**

(45) Veröffentlichungstag der Patentschrift:
04.11.81

(51) Int. Cl.³: **G 01 N 21/29**

(21) Anmeldenummer: 79810090.5

(22) Anmeldetag: 10.09.79

(54) **Verfahren und Vorrichtung zum Messen der Färbung einer Flüssigkeitsprobe.**

(30) Priorität: 15.09.78 FR 7826531

(43) Veröffentlichungstag der Anmeldung:
16.04.80 Patentblatt 80/8

(45) Bekanntmachung des Hinweises auf die Patenterteilung:
04.11.81 Patentblatt 81/44

(84) Benannte Vertragsstaaten:
**BE DE**

(56) Entgegenhaltungen:
**GB-A-699 181**
**US-A-2 007 087**
**US-A-2 341 810**
**US-A-2 489 723**
**US-A-2 758 501**
**US-A-3 176 577**
**US-A-3 964 831**
**F. SNELL et al.:**
**Colorimatric methods**
**of analysis« 1948**
**(3te Ausg.) Vol. 1**
**Ausg. Van Nostrand**
**TORONTO (CA) Teil IX**
**»Visual filter photo-**
**metry« Seiten 72—81**

(73) Patentinhaber: **CIBA-GEIGY AG, Patentabteilung**
**Postfach, CH-4002 Basel (CH)**

(72) Erfinder: **Lejeune, Xavier, 16, avenue du Louvre,**
**F-78000 Versailles (FR)**
Erfinder: **Bauhofer, Roland, Dr., Ob den Reben 13,**
**CH-4461 Böckten (CH)**

## Verfahren und Vorrichtung zum Messen der Färbung einer Flüssigkeitsprobe

Die Erfindung liegt auf dem Gebiet der Colorimetrie und betrifft insbesondere ein Verfahren und eine Vorrichtung zur Messung der Färbung bzw. Farbe einer Flüssigkeitsprobe.

Sie betrifft weiterhin die Anwendung dieses Verfahrens und dieser Vorrichtung zur Bestimmung des Färbevermögens bestimmter Flüssigkeiten.

Der hierin verwendete Ausdruck »gefärbte Flüssigkeit« umfaßt sowohl gefärbte Lösungen als auch Flüssigkeiten, die suspendierte Feststoffteilchen enthalten, die der Suspension eine bestimmte Färbung oder Farbe verliehen.

Obwohl die Erfindung auf die Messung beliebiger gefärbter Flüssigkeiten anwendbar ist, ist sie besonders dafür geeignet, die Färbung oder Farbe von Industrieabströmen zu messen.

Es ist bekannt, daß eine Vielzahl von industriellen Betrieben gefärbte flüssige Abströme ablassen und daß es erwünscht, wenn nicht aus Gründen bestehender Vorschriften erforderlich ist, sicherzustellen, daß die Färbung einen bestimmten Schwellenwert nicht überschreitet.

Es ist daher für diese Industriebetriebe, in denen solche Abströme anfallen, oder für das Personal, das die diese gefärbten Abströme betreffenden Vorschriften bachten muß, erforderlich, daß sie über ein Verfahren und eine Vorrichtung verfügen, die es in einfacher und genauer Weise ermöglichen, die Farbe bzw. die Färbung und das Färbevermögen dieser Abströme zu messen.

Derzeit erfolgen die Färbungsmessungen im wesentlichen über die Transparenz, wobei der Hauptnachteil dieser Messungen darin zu sehen ist, daß die Transparenz in keiner einfachen Relation mit der Farberscheinung steht, die der Beobachter der Oberfläche einer gefärbten Flüssigkeit zuschreibt, insbesondere, wenn diese trüb ist.

Ein sehr bekanntes Farbmeßgerät ist das Zeiss-Pulfrich Photometer. Auch dieses Gerät ist primär für Transparenzmessungen ausgelegt, kann aber auch, wie z. B. im Aufsatz von F. Snell et al »Colormetric methods of analysis« 1948 (3te Ausg.) Vol. 1 Teil IX »Visual filter photometry« Seiten 72—81 erwähnt, für Reflexionsmessungen adaptiert werden. Abgesehen davon, daß Geräte von der Art des Zeiss-Pulfrich Photometers Präzisionsmeßinstrumente und daher ziemlich teuer sind, haben sie bei Reflexmessungen an Flüssigkeiten den Nachteil, daß die visuelle Beobachtung durch ein optisches System hindurch erfolgt, das eine Blende oder einen Dichtekeil sowie einen Farbfilter umfaßt. Eine direkte Beobachtung der reflektierenden Flüssigkeitsoberfläche ist nicht möglich. Dies hat unter anderem den schwerwiegenden Nachteil, daß eine allenfalls vorliegende Trübung der Flüssigkeit unter Umständen nicht als solche erkannt wird bzw. die Messung verfälscht.

Die Erfindung betrifft ein Verfahren gemäß Oberbegriff an Patentanspruch 1 und eine Vorrichtung zur Durchführung dieses Verfahrens gemäß Oberbegriff von Patentanspruch 6.

Die Aufgabe der Erfindung besteht darin, ein mit möglichst einfachen apparativen Mitteln realisierbares Verfahren zu schaffen, welches auch bei trüben Flüssigkeiten eine zuverlässige Ermittlung der Färbung ermöglicht und damit zumindest einen der wesentlichsten Nachteile der bekannten, artgleichen Verfahren vermeidet.

Diese gestellte Aufgabe wird gemäß dem Kennzeichen von Anspruch 1 gelöst.

Im Unterschied zu den bekannten Verfahren, beispielsweise der im Zeiss-Pulfrich Photometer zur Anwendung gelangenden Methode, dient beispielsweise beim erfindungsgemäßen Verfahren die Blende nicht zur Messung einer Intensität sondern zur Modifikation der Intensität der Färbung der Vergleichsflüssigkeit. Dies ist auch eine Voraussetzung dafür, daß im weiteren Unterschied zu den bekannten Verfahren die Beobachtung der beiden Flüssigkeitsoberflächen direkt, das heißt ohne Zwischenschaltung irgendeines Lichtabschwächers (verstellbare Blende, Dichtekeil) und/oder Farbfilters, welche Elemente den visuellen Eindruck verfälschen könnten, erfolgen kann.

Bevorzugte Verfahrensvarianten sind in den Unteransprüchen 2 bis 5 beschrieben.

Auf dem Referenzprinzip arbeitende Vorrichtungen zur Messung von Flüssigkeitsfärbungen weisen oft ein lichtundurchlässiges Gehäuse mit zwei getrennten Hohlräumen zur Aufnahme einer Meßküvette und einer Vergleichsküvette auf. Ein solches allerdings nach dem Durchleuchtungsprinzip arbeitendes Gerät ist beispielsweise aus der US-Patentschrift 2 007 087 bekannt.

Die zur Durchführung des erfindungsgemäßen Verfahrens geschaffene Vorrichtung geht gemäß Oberbegriff von Patentanspruch 6 von diesem bekannten Stand der Technik aus.

Die speziellen Merkmale des neuen Verfahrens (Anspruch 1) ermöglichen eine besonders einfache apparative Realisierung. Alle wesentlichen Merkmale der Vorrichtung zur Durchführung des erfindungsgemäßen Verfahrens sind im Kennzeichen von Anspruch 6 angeführt; bevorzugte apparative Varianten in den Unteransprüchen 7 bis 10.

Weitere Einzelheiten und Vorteile der Erfindung ergeben sich aus der nachfolgenden Beschreibung der Erfindung unter Bezugnahme auf die beigefügte Zeichnung. In der Zeichnung zeigen

Fig. 1 eine Draufsicht auf die erfindungsgemäße Vorrichtung und

Fig. 2 eine Schnittansicht durch die erfindungsgemäße Vorrichtung längs der Linie II-II der Fig. 1.

In diesen Figuren besitzen die gleichen Elemente die gleichen Bezugsziffern.

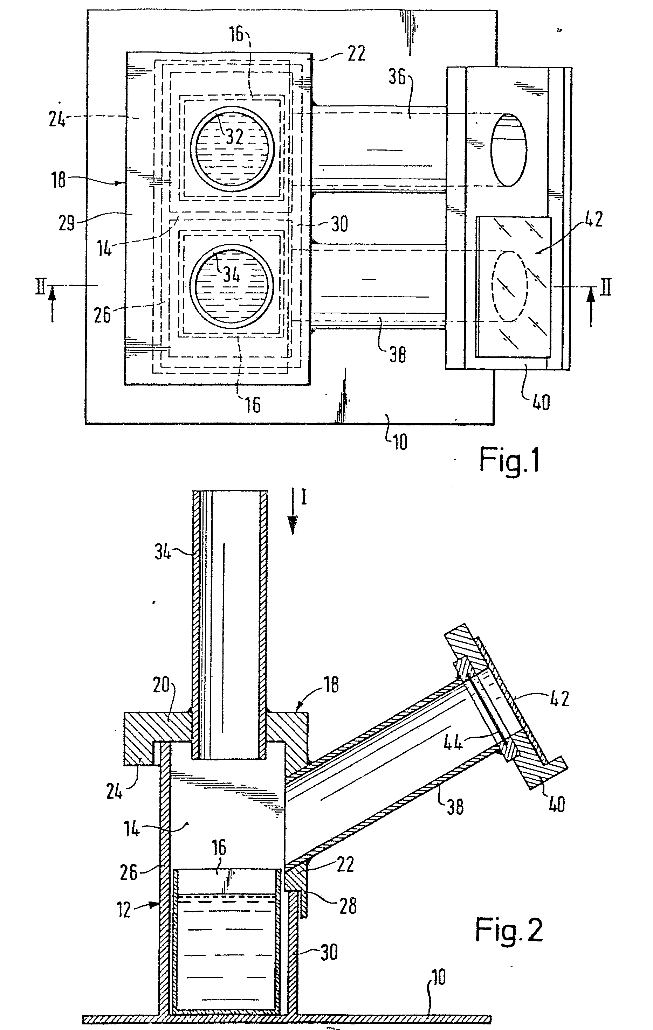

Die in den Fig. 1 und 2 dargestellte Vorrichtung umfaßt eine Unterlage in Form einer horizontalen Platte 10, auf der ein im wesentlichen parallelepipedartig geformtes Gehäuse 12 angeordnet ist, das in der Höhenrichtung mit einer vertikalen Wand 14 in zwei identische, parallelepipedartig geformte Bereiche aufgeteilt ist. Die beiden Bereiche dienen zur Aufnahme einer Meßküvette (die in den Figuren nicht dargestellt ist) und einer Vergleichsküvette 16 (siehe Fig. 2). Die beiden im Inneren des Gehäuses 12 durch die Zwischenwand 14 gebildeten parallelepipedartig geformten Bereiche können in Abhängigkeit von den angestrebten Meßbedingungen unterschiedlich gefärbt sein. Das Innere dieser Bereiche kann entweder gleichmäßig weiß mit einem starken Diffusionsvermögen gefärbt sein, wodurch sich eine integrierende Umgebung ergibt, oder kann gefärbt sein, wenn Umgebungsphänomene beobachtet werden sollen.

Die Meßküvette und die Vergleichsküvette sind prismatische Küvetten, die an ihre entsprechenden Aufnahmebereiche angepaßt sind. Diese Küvetten können transparent sein, was Absolutmessungen ermöglicht, oder können gegebene Färbungen aufweisen, was die Beobachtung von Wandphänomenen ermöglicht.

Die Vorrichtung umfaßt weiterhin eine Abdeckung 18, die eine horizontale Wand 20 und eine vertikale Wand 22 umfaßt. Die Wand 20 ist mit einem Rand 24 versehen und ist an den oberen Bereich der vertikalen Wand 26 des Gehäuses 12 angepaßt. Die Wand 22 ist mit einer Schulter 28 versehen, die an den oberen Abschnitt der vertikalen Wand 30 des Gehäuses 12 angepaßt ist. Die Abdeckung 18 ist somit dicht an das Gehäuse 12 der Unterlage angepaßt und definiert in Kombination damit ein lichtdichtes Gehäuse, das in zwei Behälter aufgeteilt ist, die jeweils die Meßküvette bzw. die Vergleichsküvette aufnehmen. Die Abdeckung 18 ist mit zwei vertikal angeordneten Beobachtungstuben 32 und 34 versehen, über die die Oberfläche der in der Meßküvette enthaltenen Flüssigkeitsprobe und die Oberfläche der in der Vergleichsküvette enthaltenen Vergleichsflüssigkeit gleichzeitig und unabhängig voneinander beobachtet werden können. Die Beobachtungstuben 32 und 34 bilden ein Binokularsystem für den die Messung durchführenden Beobachter und können jeweils mit einer Optik versehen sein, die die Beobachtung der beiden Flüssigkeiten erleichtert.

Die Abdeckung 18 ist weiterhin mit zwei Beleuchtungstuben 36 und 38 versehen, die dazu dienen, die Meßküvette bzw. die Vergleichsküvette zu beleuchten. Diese beiden Tuben sind geneigt angeordnet, so daß die Oberfläche der in den beiden Küvetten enthaltenen Flüssigkeiten mit schräg einfallendem Licht beleuchtet wird. Die Beleuchtungstuben 36 und 38 sind an ihrem äußeren Ende mit einer Halterung in Form eines Pultes 40 versehen. Das Pult 40 dient als Filterhalterung für den Beleuchtungstubus 38 (siehe Fig. 2). Hierzu wird ein Filter 42 vor den Eingang des Beleuchtungstubus 38 auf dem Pult 40 angeordnet. Diese Beleuchtungstubus 38 ist weiterhin mit einer verstellbaren, graduierten Irisblende 44 versehen, die es ermöglicht, die Beleuchtung der in der Vergleichsküvette 16 enthaltenen Vergleichsflüssigkeit nach Belieben zu variieren.

Die Blende 44 ist derart ausgelegt, daß der Öffnungswert Null die Beleuchtung der Vergleichsküvette mit der gleichen Beleuchtungsstärke ermöglicht, mit der die Meßküvette beleuchtet wird und daß man die Vergleichsküvette über den Tubus 38 mit einer mehr oder weniger starken Lichtstärke beleuchten kann.

Die Beleuchtung der Tuben 36 und 38 kann entweder mit natürlichem Licht oder mit einer optischen Anordnung erfolgen, die eine konstante und gleiche künstliche Beleuchtung der beiden Beleuchtungstuben sicherstellt.

Die erfindungsgemäße Vorrichtung wird wie folgt verwendet:

Man wählt aus einer Reihe von Filtern dasjenige Filter aus, dessen Farbe oder Färbung derjenigen der Flüssigkeitsprobe am nächsten kommt, ordnet dieses Filter in der Filterhalterung an und öffnet die Blende 44 auf die Position Null. Dann beschickt man die Vergleichsküvette mit einer bestimmten Menge der als Vergleichssubstanz ausgewählten Flüssigkeit, d. h. im allgemeinen Wasser. Anschließend beschickt man die Meßküvette mit der zu messenden Flüssigkeitsprobe, die man dann, wenn sie zu stark gefärbt ist, zuvor mit einer solchen Flüssigkeitsmenge verdünnt hat, daß die beobachtete Färbung oder Farbe der beobachteten Färbung oder Farbe der Vergleichsflüssigkeit nahekommt, die über das ausgewählte Filter beleuchtet wird.

Dann gießt man die Vergleichsflüssigkeit in einer solchen Menge in die Meßküvette, daß die gesamte in der Meßküvette enthaltene Flüssigkeitsmenge gleich ist der in der Vergleichsküvette enthaltenen Flüssigkeitsmenge. Man überprüft dann, ob die beobachteten Färbungen oder Farben chromatisch nahe beieinanderliegen und bewirkt dann, wenn dies nicht der Fall ist, eine erneute Verdünnung und wiederholt diese Maßnahmen zur Verbesserung des Ergebnisses.

Wenn die beobachteten Färbungen in ihrem chromatischen Verhalten und in ihrer Leuchtstärke ähnlich erscheinen, stellt man die Beleuchtung der Vergleichsflüssigkeit durch Veränderung der Blende des Beleuchtungstubus derart ein, daß die beobachteten Farbeindrücke identisch sind.

Da man die Verdünnung der Flüssigkeitsprobe, die colorimetrischen Eigenschaften des Filters und die Blendenöffnung kennt, kann man daraus die Färbung der Oberfläche der Flüssigkeitsprobe ableiten. Der vor der Messung eingestellte Verdünnungsgrad ermöglicht es, das Färbevermögen der Flüssigkeitsprobe zu bewerten. Um das in einem gegebenen colorimetrischen System erhaltene Ergebnis umzuwandeln, ist es erforderlich, die durch jeden der Farbfilter gelieferte Färbung zu eichen, wozu man Flüssigkeiten verwendet, die mit einem genauen Photocolorimeter und einer daran angepaßten Meßküvette, die ähnlich derjenigen der in der erfindungsgemäßen Vorrichtung verwendeten ist, gemessen worden sind. Weiterhin muß man für jedes Filter durch Eichen die durch das Öffnen oder das Schließen der Blende notwendigen Korrekturen ermitteln, wobei diese Korrekturen in Form einer Tabelle oder von Eichkurven vorliegen können.

In der Praxis genügt es, über eine begrenzte Anzahl von Filtern zu verfügen, beispielsweise über 9 Filter, unter denen man jenes Filter auswählt, dessen Färbung derjenigen der zu messenden Flüssigkeit am nächsten kommt. Man kann dann für jedes Filter eine Tabelle oder eine Eichkurve angeben, die die Korrekturen enthält, um die die Meßwerte in Abhängigkeit von der Öffnung oder der Schließung der Blende korrigiert werden müssen.

Die folgenden Beispiele dienen der weiteren Erläuterung der Erfindung.

### Beispiel 1

Messung der Färbung einer Lösung eines nichtlöslichen gelben Farbstoffs (dispergierter kunststofflöslicher Farbstoff)

Zur Bildung der Flüssigkeitsprobe, deren Färbung gemessen werden soll, dispergiert man 1 g dieses Farbstoffs in 1 l Wasser. Vor der Messung verdünnt man die erhaltene Dispersion in einem Verhältnis von 1 Vol.-Teil der Dispersion pro 9 Vol.-Teile reinen Wassers. Das Verdünnungsverhältnis beträgt somit 1 : 10.

Zur Messung der Fräbung der verdünnten Probe verwendet man ein gelbes Filter, dessen colorimetrische Eigenschaften man kennt. Man beschickt die Vergleichsküvette, die über den mit diesem Filter versehenen Tubus beleuchtet wird, mit 50 ml Wasser. Dann beschickt man die Meßküvette mit der verdünnten Probe in einer solchen Menge, daß die beobachteten Färbungen gleich erscheinen. In diesem Fall beträgt die Beschickungsmenge 25 ml. Man füllt mit der Vergleichsflüssigkeit auf 50 ml auf, um sicherzustellen, daß das Flüssigkeitsvolumen in der Meßküvette das gleiche ist. Die Blende wird auf Null eingestellt und ihre Veränderung führt zu keiner Verbesserung der Ähnlichkeit der beiden beobachteten Färbungen.

Daraus ist zu schließen, daß die Färbung der verdünnten Probe doppelt so stark ist wie die der Flüssigkeit, die zum Eichen des Filters herangezogen worden ist, wenn man berücksichtigt, daß die Verdünnung in der Meßküvette 2 beträgt (50 ml/25/ml). Das Färbevermögen der Probe entspricht den Produkt der Verdünnung der Dispersion und der Verdünnung der verdünnten Dispersion in der Meßküvette, d. h. 2 × 10 = dem 20fachen des Fräbevermögens einer dem Filter entsprechenden Dispersion.

### Beispiel 2

Messung eines rotgefärbten, trüben Industrieabstroms

Ohne vorherige Verdünnung gießt man 16 ml dieses Abstroms in die Meßküvette, um den Bereich der Vergleichsküvette, der durch ein rotes Vergleichsfilter beleuchtet wird, in etwa auszugleichen. Dann füllt man mit Wasser auf 50 ml auf. Um das Aussehen der beiden verglichenen Bereiche einander anzunähern, muß man die Blende auf einen bestimmten Blendenwert schließen (wegen der Trübung des Vergleichsbereiches).

Aus einer Eichtabelle liest man ab, daß die Blendenöffnung einem Korrekturfaktor von 1,25 entspricht. Die Intensität der Färbung der Probe wird dadurch errechnet, daß man den Verdünnungsfaktor: $\frac{50}{16} = 3,125$ mit dem Korrekturfaktor

multipliziert, d. h.: 3,125 × 1,25 = 3,9, d. h. die Intensität der Färbung der Probe entspricht dem 3,9fachen der Intensität des Filters.

Man kann dieses Ergebnis beispielsweise in dem L$^+$a$^+$b$^+$-System 1976 der Commission Internationale de l'Eclairage (C.I.E.) ausdrücken. Hierzu multipliziert man die Differenz zwischen der Färbung des reinen Wassers und der gegebenen Färbung des Filters in CIE-L$^+$a$^+$b$^+$-Einheiten um den Faktor 3,9.

Im vorliegenden Fall entspricht das Filter einer Flüssigkeit, die unter einem Diffusionsphotocolorimeter eine Farbdifferenz gegenüber Wasser um 20 NBS-Einheiten aufweist. Daraus ist zu schließen, daß das Färbevermögen des Abstroms 20 × 3,9, d. h. 78 CIE-Einheiten entspricht.

### Patentansprüche

1. Verfahren zur Messung der Färbung einer Flüssigkeitsprobe, bei welchem man mit einer oder zwei gleichen Lichtquellen gleichzeitig die Oberfläche einer bestimmten Menge der gegebenenfalls verdünnten und in einer Meßküvette vorliegenden Flüssigkeitsprobe und die Oberfläche einer gleich großen Menge einer in einer mit der Meßküvette identischen Vergleichsküvette vorliegenden Vergleichsflüssigkeit beleuchtet und in einem hierzu verschiedenen Winkel visuell beobachtet, wobei man im Strahlengang der Vergleichsflüssigkeit ein Farbfilter mit einer der Flüssigkeitsprobe zumindest ähnlichen Färbung anordnet und die Öffnung einer im selben Strahlengang liegenden verstellbaren Blende derart steuert, daß die beobachtete Färbung der Vergleichsflüssigkeit der beobachteten Färbung der Flüssigkeitsprobe entspricht, und wobei man die Färbung der Flüssigkeitsprobe in Abhängigkeit von der eventuellen Verdünnung der Flüssigkeitsprobe, der Färbung des Filters und der Öffnung der Blende ermittelt, dadurch gekennzeichnet, daß man das Farbfilter und die Blende zwischen Lichtquelle und Vergleichsflüssigkeit anordnet und die visuelle Beobachtung direkt, das heißt ohne Zwischenschaltung einer Blende und/oder eines Farbfilters vornimmt.

2. Verfahren nach Anspruch 1, dadurch gekennzeichnet, daß man aus einer Reihe von Filtern das Filter auswählt, dessen Färbung der Flüssigkeitsprobe am nächsten kommt; daß man die Vergleichsküvette mit einer bestimmten Menge der Vergleichsflüssigkeit beschickt; daß man die Meßküvette mit der zu messenden Flüssigkeitsprobe, die man gegebenenfalls zuvor verdünnt hat, in einer solchen Menge beschickt, daß die beobachtete Färbung der beobachteten Färbung der durch das ausgewählte Filter beleuchteten Vergleichsflüssigkeit nahekommt, und die Meßküvette mit der Vergleichsflüssigkeit bis zu einer Flüssigkeitsmenge auffüllt, die der Flüssigkeitsmenge in der Vergleichsflüssigkeit entspricht; daß man überprüft, ob die Färbungen chromatisch nahe beieinander liegen; daß man dann, wenn dies nicht der Fall ist, eine erneute Verdünnung und eine Wiederholung der Maßnahmen vornimmt.

3. Verfahren nach den Ansprüchen 1 und 2, dadurch gekennzeichnet, daß man die Oberfläche der Flüssigkeitsprobe und die Oberfläche der Vergleichsflüssigkeit gleichzeitig und unabhängig voneinander beobachtet, und zwar die eine mit dem einen Auge und die andere mit dem anderen Auge.

4. Verfahren nach Anspruch 3, dadurch gekennzeichnet, daß man die Oberfläche der Flüssigkeitsprobe und die Oberfläche der Vergleichsprobe von zwei benachbarten Positionen aus beobachtet, die vertikal jeweils oberhalb der beiden Flüssigkeitsoberflächen liegen.

5. Verfahren nach den Ansprüchen 1 bis 4, dadurch gekennzeichnet, daß man die Oberfläche der Flüssigkeitsprobe und die Oberfläche der Vergleichsflüssigkeit mit dem schräg einfallenden Licht einer natürlichen oder einer künstlichen Lichtquelle beleuchtet.

6. Vorrichtung zur Durchführung des Verfahrens nach den Ansprüchen 1 bis 5, mit einem lichtundurchlässigen Gehäuse (12), das zwei getrennte Hohlräume zur Aufnahme der Meßküvette bzw. der Vergleichsküvette (16) aufweist, gekennzeichnet durch zwei oberhalb der Meßküvette bzw. der Vergleichsküvette angeordnete Beobachtungstuben (32, 34) und zwei im Winkel zu den Beobachtungstuben angeordnete Beleuchtungstuben (36, 38), die oberhalb der Meßküvette bzw. der Vergleichsküvette enden, wobei der der Vergleichsküvette zugeordnete Beleuchtungstubus (38) mit einer Filterhalterung (40) und einer einstellbaren, graduierten Blende (44) versehen ist.

7. Vorrichtung nach Anspruch 6, dadurch gekennzeichnet, daß das Oberteil des Gehäuses durch eine die beiden Hohlräume zur Aufnahme der Küvetten lichtdicht abdeckende Haube (18) gebildet ist, die die beiden Beobachtungstuben (32, 34) und die beiden Beleuchtungstuben (36, 38) trägt.

8. Vorrichtung nach einem der Ansprüche 6 und 7, dadurch gekennzeichnet, daß die Beobachtungstuben (32, 34) vertikal und die Beleuchtungstuben (36, 38) geneigt angeordnet sind, um die Oberfläche der Flüssigkeitsprobe und die Oberfläche der Vergleichsflüssigkeit mit schrägem Lichteinfall zu beleuchten.

9. Vorrichtung nach einem der Ansprüche 6 bis 8, dadurch gekennzeichnet, daß das Innere der Hohlräume weiß oder gefärbt ist.

10. Vorrichtung nach einem der Ansprüche 6 bis 9, dadurch gekennzeichnet, daß die Küvetten prismatische Küvetten sind, die transparent sind oder eine bestimmte Färbung besitzen.

## Claims

1. A process for measuring the coloration of a liquid test specimen, in which process there are visually observed simultaneously, with one or two identical light sources, the surface of a specific amount of the liquid test specimen, diluted if necessary, contained in a graduated cuvette and the surface of an equal amount of a comparison liquid contained in a comparative cuvette identical to the graduated cuvette, the liquid test specimen being illuminated directly and the comparison liquid being illuminated through a filter which has a coloration aproximating to that of the liquid test specimen and also through a diaphragm of which the aperture can be adjusted so that the observed coloration of the comparison liquid corresponds to the observed coloration of the liquid test specimen, by which arrangement can be deduced the coloration of the liquid test specimen as a function of the eventual dilution of the liquid test specimen, of the coloration of the filter and of the size of aperture of the diaphragm, characterised in that the colour filter and the diaphragm are located between the light souce and the comparison liquid, and that the visual observation is made directly, that is to say, without insertion of a diaphragm and/or a colour filter.

2. A process according to Claim 1, characterised in that from a series of filters there is selected the filter of which the colour is nearest to that of the liquid test specimen; that a specific amount of the comparison liquid is poured into the comparative cuvette; that there is then poured into the graduated cuvette the liquid test specimen to be measured, diluted if necessary beforehand, the amount of liquid specimen being such that the observed coloration thereof approximates to the observed coloration of the comparison liquid illuminated through the selected filter, and that comparison liquid is subsequently poured into the graduated cuvette until the amount of liquid therein corresponds to the amount of comparison liquid in the comparative cuvette; that an observation is made to verify whether the colorations are chromatically alike; and that then, if that should not be the case, a further dilution is effected und the measures are repeated.

3. A process according to Claims 1 and 2, characterised in that the surface of the liquid test specimen and the surface of the comparison liquid are observed simultaneously and independently of one another, the one being observed with the one eye and the other with the other eye.

4. A process according to Claim 3, characterised in that the surface of the liquid test specimen and the surface of the comparison specimen are observed from two adjacent positions, each situated vertically above the respective liquid surface.

5. A process according to Claims 1 to 4, characterised in that the surface of the liquid test specimen and the surface of the comparison liquid are illuminated by the obliquely striking light from a natural or artificial light source.

6. An apparatus for carrying out the process according to Claims 1 to 5, which consists of a lightproof housing (12) containing two separate chambers designed to hold the graduated cuvette and the comparative cuvette (16), characterised by two observation tubes (32, 34) arranged above the graduated cuvette and comparative cuvette, respectively, and two illuminating tubes (36, 38) which are positioned at an angle to the observation tubes (36, 38), and which end above the graduated cuvette and comparative cuvette, respectively, the illuminating tube (38) above the comparative cuvette being provided with a filter holder (40) and an adjustable graduated diaphragm (44).

7. An apparatus according to Claim 6, characterised in that the upper part of the housing is formed by a lightproof hood (18) covering the two chambers for holding the cuvettes, which hood carries the two observation tubes (32, 34) and the two illuminating tubes (36, 38).

8. An apparatus according to any one of Claims 6 and 7, characterised in that the observation tubes (32, 34) are arranged vertically, and the illuminating tubes (36, 38) at an angle to the vertical, in order to be able to illuminate the surface of the liquid test specimen and the surface of the comparison with obliquely striking light.

9. An apparatus according to any one of Claims 6 to 8, characterised in that the interior of the chambers is white or coloured.

10. An apparatus according to any one of Claims 6 to 9, characterised in that the cuvettes are prismatic cuvettes which are transparent or have a specific coloration.

## Revendications

1. Procédé en vue de mesurer la coloration d'un échantillon de liquide, procédé dans lequel, au moyen d'une ou de deux sources lumineuses identiques, on éclaire simultanément et on observe visuellement, sous un angle différent, la surface d'une quantité déterminée de l'échantillon de liquide éventuellement dilué et présent dans une cuvette de mesure, de même que la surface d'une quantité égale d'un liquide de comparaison déposé dans une cuvette de comparaison identique à la cuvette de mesure, un filtre coloré ayant une coloration au moins analogue à celle de l'échantillon de liquide étant installé dans le parcours des rayons du liquide de comparaison, tandis que l'ouverture d'un diaphragme réglable installé dans le même parcours des rayons est réglée de telle sorte que la coloration obervée du liquide de comparaison corresponde à la coloration observée de l'échantillon de liquide, la coloration de ce dernier étant déterminée en fonction de la dilution éventuelle de l'échantillon de liquide, de la coloration du filtre et de l'ouverture du diaphragme, caractérisé en ce qu'on installe le filtre coloré et le diaphragme entre la source lumineuse et le liquide de comparaison, tandis que l'on effectue l'observation visuelle directement, c'est-à-dire sans intercaler un diaphragme et/ou un filtre coloré.

2. Procédé suivant la revendication 1, caractérisé en ce que, parmi une série de filtres, on choisit celui dont la coloration se rapproche le plus de celle de l'échantillon de liquide; on verse une quantité déterminée du liquide de comparaison dans la cuvette de comparaison; on verse, dans la cuvette de mesure, l'échantillon de liquide à mesurer, que l'on a éventuellement dilué préalablement, en une quantité calculée de telle sorte que la coloration observée se rapproche de la coloration observée du liquide de comparaison éclairé à travers le filtre sélectionné et l'on verse, dans la cuvette de mesure, le liquide de comparaison jusqu'à ce qu'on atteigne une quantité de liquide correspondant à celle contenue dans la cuvette de comparaison; on vérifie si les colorations ont des valeurs chromatiques proches l'une de l'autre puis, dans la négative, on procède à une nouvelle dilution et l'on répète les opérations.

3. Procédé suivant les revendications 1 et 2, caractérisé en ce qu'on observe la surface de l'échantillon de liquide et la surface du liquide de comparaison simultanément et indépendamment l'une de l'autre, une surface étant observée d'un oeil et l'autre surface, de l'autre oeil.

4. Procédé suivant la revendication 3, caractérisé en ce qu'on observe la surface de l'échantillon de liquide et la surface de l'échantillon de comparaison à partir de deux positions voisines situées chacune verticalement au-dessus des deux surfaces de liquides.

5. Procédé suivant les revendications 1 à 4, caractérisé en ce qu'on éclaire la surface de l'échantillon de liquide et la surface du liquide de comparaison avec un faisceau lumineux en oblique venant d'une source de lumière naturelle ou artificielle.

6. Dispositif pour la mise en oeuvre du procédé suivant les revendications 1 à 5, ce dispositif comportant un logement opaque (12) ayant deux compartiments creux séparés destinés à recevoir respectivement la cuvette de mesure et la cuvette de comparaison (16), caractérisé en ce qu'il comprend deux tubes d'observation (32, 34) disposés respectivement au-dessus de la cuvette de mesure et de la cuvette de comparaison, de même que deux tubes d'éclairage (36, 38) disposés angulairement par rapport aux tubes d'observation et se terminant au-dessus de la cuvette de mesure et de la cuvette de comparaison, le tube d'éclairage (38) attribué la cuvette de comparaison étant pourvu d'un support (40) pour un filtre, ainsi que d'un diaphragme réglable et gradué (44).

7. Dispositif suivant la revendication 6, caractérisé en ce que la partie supérieure du logement est formée par une coiffe (18) recouvrant, de manière étanche à la lumière, les deux compartiments creux destinés à recevoir les cuvettes, cette coiffe supportant les deux tubes d'observation (32, 34), ainsi que les deux tubes d'éclairage (36, 38).

8. Dispositif suivant une des revendications 6 et 7, caractérisé en ce que les tubes d'observation (32, 34) sont disposés verticalement, tandis que les tubes d'éclairage (36, 38) sont inclinés afin d'éclairer la surface de l'échantillon de liquide et la surface du liquide de comparaison avec un faisceau lumineux oblique.

9. Dispositif suivant une des revendications 6 à 8, caractérisé en ce que l'intérieur des compartiments creux est blanc ou coloré.

10. Dispositif suivant une des revendications 6 à 9, caractérisé en ce que les cuvettes sont des cuvettes prismatiques transparentes ou d'une coloration déterminée.

Fig.1

Fig.2